# EUROPÄISCHE PATENTSCHRIFT

(11) **EP 3 248 182 B1**
(45) Veröffentlichungstag und Bekanntmachung des Hinweises auf die Patenterteilung: **30.06.2021**
(21) Anmeldenummer: 16701919.9
(22) Anmeldetag: 21.01.2016
(51) Int. Cl.: G09B 23/30, G09B 23/28

(54) **EINRICHTUNG ZUM LEHREN, LERNEN UND/ODER TRAINIEREN DER IMPLANTATION UND/ODER EXPLANTATION PERKUTANER ENTERALER ERNÄHRUNGSSONDEN**
DEVICE FOR TEACHING, LEARNING AND/OR TRAINING THE IMPLANTATION AND/OR EXPLANTATION OF PERCUTANEOUS ENTERAL FEEDING PROBES
DISPOSITIF D'ENSEIGNEMENT, D'APPRENTISSAGE ET/OU D'ENTRAÎNEMENT DE L'IMPLANTATION ET/OU DE L'EXPLANTATION DE SONDES DE NUTRITION PAR VOIE ENTÉRALE PERCUTANÉE

(30) Priorität: 21.01.2015 DE 102015100851
(43) Veröffentlichungstag der Anmeldung: 29.11.2017
(73) Patentinhaber: Fresenius Kabi Deutschland GmbH, 61352 Bad Homburg (DE)
(72) Erfinder: GRUND, Karl E., 72072 Tübingen (DE)
(74) Vertreter: Fresenius Kabi Deutschland GmbH
(86) Internationale Anmeldenummer: PCT/EP2016/051247
(87) Internationale Veröffentlichungsnummer: WO 2016/116567

(56) Entgegenhaltungen:
- WO-A1-96/42076
- WO-A2-02/38039
- US-A- 5 518 406
- US-A- 5 947 743
- US-A1- 2005 214 727
- US-A1- 2007 166 682
- US-A1- 2012 082 970
- US-A1- 2012 202 179
- US-A1- 2012 308 977
- US-A1- 2014 093 854

## Beschreibung

### Technisches Gebiet

Gegenstand der Erfindung ist ein Phantom zum Lehren, Lernen und/oder Trainieren der Implantation und/oder Explantation perkutaner enteraler Ernährungssonden. Prinzipiell sind enterale Ernährungssonden Schläuche, die perkutan und peritoneal, also durch die Bauchdecke hindurch, direkt in den Magen, oder durch die Bauchdecke hindurch direkt in das Jejunum (oberer Teil des Dünndarms), oder durch die Bauchdecke hindurch in den Magen und von dort aus indirekt in das Jejunum gelegt werden. Enterale Ernährung durch enterale Ernährungssonden ist bei Patienten indiziert, die temporär oder permanent Nahrungsmittel und/oder Flüssigkeiten nicht oral aufnehmen können. Ohne enterale Ernährung müssten diese Patienten verhungern und/oder verdursten.

### Stand der Technik

Bei Patienten, bei denen die Behinderung der Nahrungs- und/oder Flüssigkeitsaufnahme im Oropharynx und/oder im Ösophagus lokalisiert, der Magen aber gesund ist, wird die Ernährungssonde vorzugsweise endoskopisch kontrolliert, perkutan in den Magen gelegt. Dieses Verfahren wird "Perkutane Endoskopische Gastrostomie (PEG)" genannt.

Bei Patienten, bei denen die Behinderung der Nahrungs- und/oder Flüssigkeitsaufnahme im Oropharynx und/oder im Ösophagus lokalisiert, der Magen aber pathologisch ist, wird die Ernährungssonde vorzugsweise endoskopisch kontrolliert perkutan in den Magen und von dort aus indirekt in das Jejunum gelegt. Dieses Verfahren wird "Perkutane Endoskopische Gastrojejunostomie mit Innenkatheter (JET-PEG)" genannt.

Bei Patienten, bei denen die Behinderung der Nahrungs- und/oder Flüssigkeitsaufnahme im Oropharynx und/oder im Ösophagus lokalisiert, der Magen aber nicht vorhanden ist, wird die Ernährungssonde vorzugsweise endoskopisch kontrolliert, perkutan direkt in das Jejunum gelegt. Dieses Verfahren wird "Endoskopische Perkutane Jejunostonie (EPJ)" genannt.

Die enterale Ernährung durch endoskopisch perkutan angelegte Ernährungssonden wird inzwischen seit mehr als 30 Jahren und mehr angewendet. Allerdings bestehen insbesondere bei Gastroenterologen mit geringer Erfahrung der hierbei erforderlichen chirurgischen Verfahren sowie bei Chirurgen mit geringer oder fehlender Erfahrung mit den hierbei erforderlichen Verfahren der interventionellen Endoskopie Unsicherheiten und Komplikationsrisiken.

Daher ist ein entsprechendes Training der Gastroenterologen sowie Chirurgen in der Anlage von solchen Sonden notwendig. Ebenso gibt es Bedarf an Training zur Pflege bzw. zum Austausch von solchen Sonden für Pflegekräfte.

Die US 2012/0082970 A1 und die US 2014/0093854 A1 offenbaren ein Trainingsphantom für die laparoskopische Chirurgie, die der minimalinvasiven Chirurgie zugeordnet ist. Um Beobachtungen zu ermöglichen sind die Seiten des Trainingsphantoms offen.

In der US 2012/0202179 A1 ist ein geschlossener Trainingssimulator für die laparoskopische Chirurgie gezeigt, wobei ein Zugang für ein endoskopisches chirurgisches Instrument durch verschiedene (Haut-) Simulationsschichten vordefiniert ist.

Die US 2012/0308977 A1 offenbart ein Trainingsphantom aufweisend mehrere Eintrittsöffnungen zur Aufnahme von chirurgischen Geräten, die in unterschiedlichen Winkeln orientiert sind.

Die US 2007/0166682 A1 offenbart ein Trainingsapparat das mittels innenliegender Sensoren einen Hinweis auf den Status eines medizinischen Eingriffs gibt.

In der US 2005/0214727 A1 ist eine Vorrichtung und ein Verfahren zum Training verschiedener medizinischer Verfahren offenbart, bei denen Präzision erforderlich ist, wobei diese durch dynamische Bewegung der Organe, Gewebe und verschiedener Körperteile, die an dem Verfahren beteiligt sind, beeinflusst werden kann.

In der DE 11 2006 003 722 A1 ist ein Trainingsphantom offenbart, welches erlaubte Bereiche und Risikobereiche aufweist, wobei diese von chirurgischen Instrumenten in unterschiedlich restriktiven Abstufungen berührt oder durchdrungen werden dürfen oder nicht.Die US 6780016 B1 offenbart ein Trainingssimulator aus einem mehrlagigen Elastomermaterial und integrierten Flüssigkeitskanälen.

In der US 7665995 B2 ist ein Trainingssimulator mit einer Vielzahl von kontaktlosen Sensoren zur Erfassung der Position eines Instruments offenbart.

Die WO 02/38039 A2 offenbart einen Trainingssimulator aufweisend drei verschiedene Bereiche, um unterschiedliche Eingriffe zu trainieren.

### Darstellung der Erfindung

Der Erfindung liegt die Aufgabe zugrunde, eine Einrichtung (Phantom) zum Lehren, Lernen und/oder Trainieren der Implantation und/oder Explantation und/oder Pflege und/oder Austausch perkutaner enteraler Ernährungssonden zu entwickeln, welche der PEG, JET-PEG und/oder EPJ an Patienten möglichst gut entsprechen. Das Phantom soll einfach aufgebaut, kostengünstig herstellbar und einfach zu bedienen sein. Insbesondere soll wenigstens eine Ausgestaltung, auch ohne ärztliche Unterstützung, beispielsweise für Pflegekräfte anwendbar sein.

Diese Aufgabe wird durch eine Vorrichtung nach Anspruch 1 gelöst. Vorteilhafte Ausgestaltungen der Erfindung sind in den Unteransprüchen angegeben.

Eine erfindungsgemäße Einrichtung (Phantom) zum Lehren, Lernen und/oder Trainieren der Implantation und/oder Explantation perkutaner enteraler Ernährungssonden, umfasst einen vorteilhafterweise quaderförmigen Behälter, der einen Innenraum zumindest teilweise umschließt. Der Behälter könnte auch, entsprechend der Anatomie des menschlichen Körpers, gerundet sein. Er ist geschlossen, um einen geschlossenen Bauchraum zu simulieren.

Das Phantom hat wenigstens eine Abdeckung (oder auch Deckel), der mindestens eine artifizielle Nachbildung des Lumens und/oder mindestens einer Nachbildung von Magenwandschichten wie der ventralen Wand eines Magens und Jejunums oder aller Organe des oberen Magendarm-Trakts und einer Nachbildung von Bauchwandschichten entsprechend der Bauchdecke umfasst. Die Nachbildungen der Schichten liegen übereinander, wobei die Nachbildung von Bauchwandschichten zur Außenseite des Behälters orientiert ist, während die Nachbildung der Magenwandschichten zur Innenseite des Behälters, d.h. zum Innenraum hin orientiert ist. Die Nachbildung der Bauchwandschichten und die Nachbildung der Magenwandschichten sind zumindest teilweise gegeneinander beweglich und bevorzugt gegeneinander verschiebbar.

Bevorzugt entsprechen der optische Aspekt, die Elastizität und die haptische Konsistenz sowie die Schneid- und Punktions-Eigenschaften dieser Nachbildungen der Schichten mindestens an den Stellen, wo die Implantation und/oder Explantation erfolgen soll, ausreichend für dem bestimmungsgemäßen Anwendungszweck der natürlicher Organwände und/oder der einer natürlichen Bauchdecke.

Die Nachbildungen sind für die Diaphanie oder Diaphanoskopie geeignet und haben hierzu eine ausreichende Lichtdurchlässigkeit.

Die Abdeckung ist bevorzugt an der Oberseite angeordnet, um einen realistischen und einfachen Zugang zu ermöglichen. Sie kann auch an jeder anderen Seite angeordnet sein.

Weiterhin schließt der Behälter wenigstens eine Kamera ein. Es handelt sich hierbei bevorzugt um eine digitale Video- oder Fotokamera. Die wenigstens eine Kamera, bildet wenigstens einen Bereich der Nachbildung der Magenwandschichten ab.

Ein solches Phantom umfasst nur wenige Komponenten und ist daher besonders einfach und insbesondere von Anfängern und Pflegekräften, auch ohne den Einsatz eines Endoskops, verwendbar. Damit können erstmalig auch Pflegekräfte insbesondere für die Nachsorge trainiert werden.

Es ist auch bevorzugt, wenn wenigstens eine Lichtquelle, die bevorzugt im Innenraum angeordnet ist, vorgesehen ist, um den Innenraum zu beleuchten. Damit wird das von den Kameras benötigte Licht, auch ohne Endoskope, zur Verfügung gestellt.

Das Phantom bzw. der Behälter des Phantoms weist wenigstens eine Eintrittsöffnung, durch welche beispielsweise ein Endoskop in den Innenraum eingeführt werden kann auf.

In einer bevorzugten Ausführungsform ist wenigstens eine weitere Kamera im Innenraum vorgesehen, um Teile des Innenraums und/oder den gesamten

Innenraum abzubilden. Durch mehrere Kameras ist nun eine simultane Kontrolle von der Außensicht (durch den 1. Operateur), vom Innenbild durch ein Endoskop (durch den 2. Operateur) sowie von wenigstens einem Innenbild einer Kamera im Innenraum möglich. Durch eine Kamera im Innenraum kann auch die Position des Endoskops kontrolliert werden. Somit kann auch ein Teamtraining von 1. und 2. Operateur sowie einer Assistenz durchgeführt werden.

Bevorzugt ist wenigstens ein Sensor vorgesehen, mit dem die Bewegung und/oder Orientierung und/oder Position eines Instruments bzw. Endoskops im Innenraum verfolgt werden kann.

Zum Auffinden einer für die Anlage einer PEG, JET-PEG und/oder EPJ geeigneten Stelle in der Bauchdecke sowie in der darunter befindlichen und hierfür geeigneten Stelle der vorderen bzw. ventralen Magenwand und/oder vorderen bzw. ventralen Jejunumwand wird die endoskopisch kontrollierte Palpation und die Diaphanoskopie angewendet. Hierbei wird beispielsweise mit einem Finger an verschiedenen Stellen außen auf die Bauchwand gedrückt und gleichzeitig endoskopisch beobachtet, an welchen Stellen eine hierdurch verursachte Beule innen an der vorderen Wand des Magens bzw. Jejunums verursacht wird, bis die optimale Stelle für die Anlage einer PEG, JET-PEG und/oder EPJ gefunden ist. Hierzu hat bevorzugterweise die artifizielle vordere Bauchwand sowie die artifizielle vordere Wand des Magens und/oder des Jejunums eine geeignete Elastizität und haptische Konsistenz.

Alternativ oder zusätzlich wird hierzu das Licht eines Endoskops endoluminal auf die für die Anlage einer PEG, JET-PEG und/oder EPJ geeignete Stelle der vorderen Wand des Magens bzw. Jejunums gerichtet und außen auf der Bauchdecke die Stelle lokalisiert, wo dieses Licht durch die Bauchwand hindurch scheint. Hierzu hat die artifizielle Bauchwand und die artifizielle vordere Wand des Magens und/oder Jejunums eine geeignete Lichtdurchlässigkeit für die Diaphanie.

Um die korrekte Einstichtiefe der bei der Anlage einer PEG, JET-PEG und/oder EPJ verwendeten Nadeln, Skalpelle, Kanülen, Katheter und/oder Sonden in die von Patient zu Patient sehr unterschiedlichen Schichtdicken der Bauchwand sowie der darunter befindlichen Magenwand oder Jejunumwand sowie der eventuell dazwischen liegenden Luftschicht haptisch kontrollieren zu können, umfasst die artifizielle Bauchdecke und/oder die artifizielle vordere Wand des Magens und/oder Jejunums bevorzugterweise mindestens zwei Wandschichten mit diesbezüglich verschiedenen Eigenschaften. Die oberste Schicht der Bauchwand, welche der Kutis (Außenhaut) entspricht, umfasst bevorzugt ein im Vergleich zu der darunter befindlichen Schicht, welche der Fettschicht entspricht, Material mit einer höheren Reißfestigkeit aber geringeren Elastizität. Die unter der äußeren Schicht befindliche Schicht, welche der Fettschicht entspricht, hat bevorzugt eine geringere Reißfestigkeit aber höhere Elastizität als die darunter befindliche Muskelschicht. Die den natürlichen Gewebeschichten entsprechenden Materialschichten der artifiziellen Bauchwand haben bevorzugt ähnliche oder deutlich unterschiedlichere haptische Eigenschaften als die natürlichen Gewebeschichten. Um an den artifiziellen Wänden Fadennähte bzw. Anker anbringen zu können, haben mindestens die artifiziellen Wandschichten, welche bei natürlichen Gewebeschichten der Kutis (Außenhaut) oder der Muskularis (Muskelschicht) entsprechen, ausreichende Reißfestigkeiten.

Um die Explantation einer PEG, JET-PEG und/oder EPJ auch dann ausführen zu können, wenn Teile der PEG, JET-PEG und/oder EPJ, insbesondere die innere Halteplatte, nach längerer Liegezeit mit Gewebe der Magenwand oder Jejunumwand überwuchert sind (sogenanntes Buried-Bumper-Syndrom), kann dieses wuchernde Gewebe in der erfindungsgemäßen Einrichtung mit einem artifiziellen Gewebe realisiert werden, das HF-chirurgisch schneidbar ist.

Um die korrekte sowie die nicht korrekte Implantation und/oder Explantation einer PEG, JET-PEG und/oder EPJ nicht nur von außen visuell, sondern auch endoskopisch von innen kontrollieren zu können, ist bevorzugt im Lumen des artifiziellen Magens und/oder Jejunums und/oder an anderen Stellen mindestens eine Video-Kamera vorhanden und/oder mindestens ein Endoskop in das Lumen einführbar.

Weiterhin ist bevorzugt ein Monitor vorgesehen und mit dem Phantom verbunden, um Bilder von den im Phantom integrierten Kameras darzustellen. Es kann auch durch den Monitor bzw. einen integrierten Touchscreen eine Steuerung des Phantoms oder seiner Komponenten erfolgen. Ebenso könnte auch eine Videoaufzeichnung der internen Kamerabilder sowie der gesamten simulierten Operation erfolgen. Alternativ oder zusätzlich könnten diese Funktionen auch von einem PC (Personal Computer) wahrgenommen werden. Es kann auch ein Videoprozessor, Videomonitor und/oder Video-Recorder vorgesehen werden.

Weiterhin können Sensoren und/oder Messeinrichtungen vorgesehen sein, deren Signale nach entsprechender Signalverarbeitung in Feedback-Systeme, z.B. zur Qualitätsbeurteilung eingespeist werden können.

Die Erfindung wird nachstehend ohne Beschränkung des allgemeinen Erfindungsgedankens anhand von Ausführungsbeispielen, unter Bezugnahme auf die Zeichnungen, exemplarisch beschrieben.
Figur 1 zeigt eine erfindungsgemäße Vorrichtung in einer ersten perspektivischen Ansicht.
Figur 2 zeigt die Vorrichtung in einer zweiten perspektivischen Ansicht.
Figur 3 zeigt einen Schnitt einer ersten Variante.
Figur 4 zeigt einen Schnitt einer zweiten Variante.

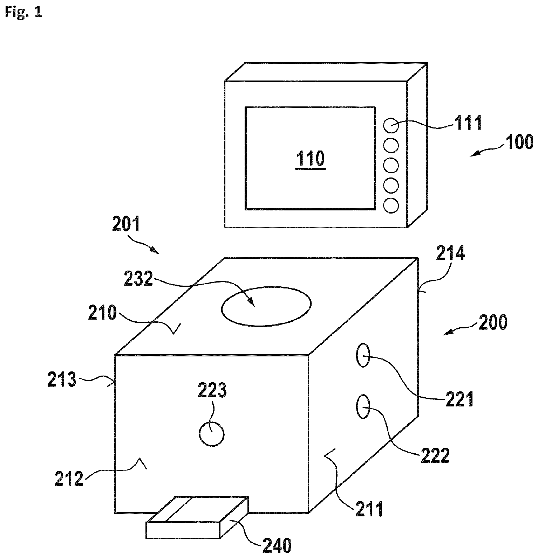

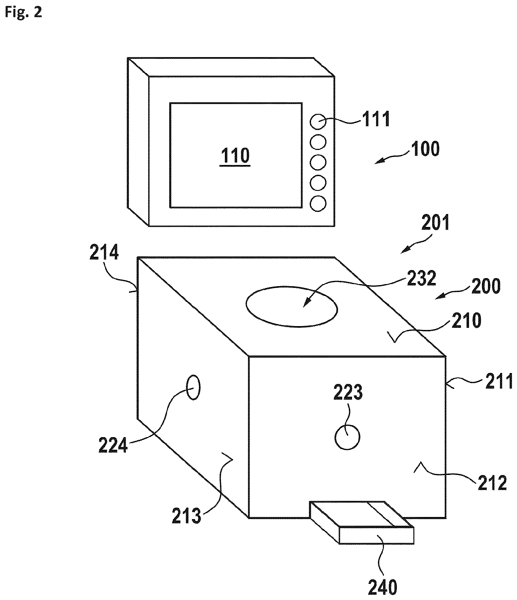

In den Figuren 1 und 2 ist eine erfindungsgemäße Vorrichtung in zwei perspektivischen Ansichten dargestellt. Die Vorrichtung umfasst ein Phantom 200 mit einem bevorzugt quaderförmigen Behälter. Selbstverständlich könnte der Behälter auch, entsprechend der Anatomie des menschlichen Körpers, gerundet sein. Ein quaderförmigen Behälter ist doch einfacher und kostengünstiger zu fertigen und erfüllt die Anforderungen an eine Simulation des Operationsgebietes ebenso gut. Der Behälter hat bevorzugt eine Abdeckung 210, durch die bevorzugt auch die Simulation des operativen Eingriffs in die Innenseite erfolgt. Weiterhin gibt es bevorzugt eine erste Seitenwand 211, eine zweite Seitenwand 212, eine dritte Seitenwand 213 und eine vierte Seitenwand 214. Der Behälter ist bevorzugt durch einen Boden 215 abgeschlossen. Bevorzugt befindet sich in wenigstens einer Seitenwand wenigstens eine Eintrittsöffnung. Durch eine solche Eintrittsöffnung kann beispielsweise ein Endoskop, mindestens ein weiteres chirurgisches Instrument und/oder wenigstens eine weitere Kamera eingeführt werden, um die Vorgänge im Innenraum zu beobachten oder zu beeinflussen. So hat in dem hier dargestellten Ausführungsbeispiel die erste Seitenwand 211 eine erste Eintrittsöffnung 221 und eine zweite Eintrittsöffnung 222. Die zweite Seitenwand 212 hat eine dritte Eintrittsöffnung 223 und die dritte Seitenwand 213 hat eine vierte Eintrittsöffnung 224. Bevorzugt ist mindestens eine der Eintrittsöffnungen durch ein flexibles und/oder elastisches und insbesondere lichtdichtes Material verschlossen, um unerwünschten Lichteinfall von außen zu verhindern.

Die Abdeckung 210 erlaubt Eingriffe von außen durch verschiedene Schichten aus Materialien, die verschiedene Gewebeschichten von Körpergeweben simulieren. Der detaillierte Schichtaufbau wird in den nachfolgenden Figuren ausführlich beschrieben. In dieser Figur ist der Bereich der Nachbildung der Magenwandschichten 232, durch den insbesondere die Eingriffe erfolgen sollen markiert.

Bevorzugt sind weitere Mittel zur Bedienerführung und zur erleichterten Handhabung des Phantoms vorgesehen. So kann beispielsweise eine Schublade 240 vorgesehen sein, die eine Bedienungsanleitung enthält und die bevorzugt von der Vorderseite des Phantoms, entsprechend der zweiten Seitenwand 212, in diesem Ausführungsbeispiel zugänglich ist.

Weiterhin ist bevorzugt ein Monitor 100 vorgesehen und mit dem Phantom verbunden, um Bilder von den im Phantom integrierten Kameras oder wenigstens einer Endoskopkamera darzustellen. Es kann auch durch den Monitor eine Steuerung des Phantoms oder seiner Komponenten erfolgen. Ebenso könnte auch eine Videoaufzeichnung der internen Kamerabilder sowie der gesamten simulierten Operation erfolgen. Alternativ oder zusätzlich könnten diese Funktionen auch von einem PC (Personal Computer) wahrgenommen werden. Der Monitor 100 hat zur Anzeige ein Display 110, welches auch einen Touchscreen haben könnte, sowie weitere optionale Bedienelemente 111, wie Schalter oder auch Potentiometer. Weiterhin könnte der Monitor Kommunikationsmittel zu Kommunikation mit externen Geräten, wie Netzwerkadapter, beispielsweise für Ethernet, WLAN oder auch NFC, Bluetooth haben. Dies könnte beispielsweise auch eine Steuerung bzw. Wiedergabe auf Smartphones oder Tablets ermöglichen.

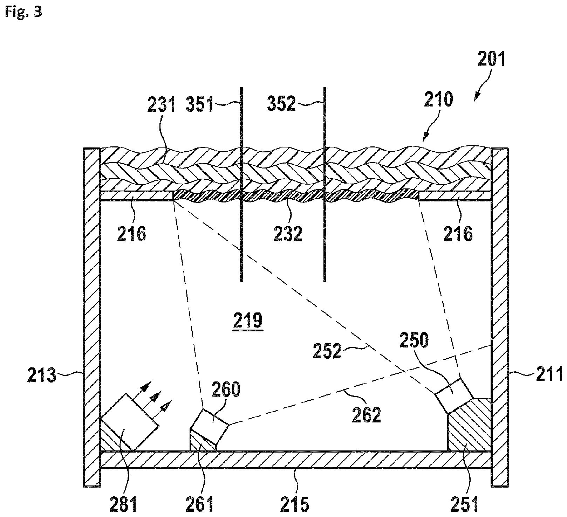

Die Figur 3 zeigt einen Schnitt einer ersten einfachen Ausführungsform der Erfindung. Die Ansicht zeigt den Innenraum aus Richtung der zweiten Seitenwand, welche entfernt wurde. So befindet rechts in der Figur die erste Seitenwand 211 und links die dritte Seitenwand 213. Der Boden ist bevorzugt durch eine Bodenplatte 215 abgeschlossen. Diese kann auch zur Erhöhung der Stabilität der Anordnung beitragen. An der Oberseite befindet sich eine Abdeckplatte 216, welche bevorzugt eine Aussparung für eine Gewebesimulation für Magenwandschichten 232 hat. Die Abdeckplatte 216 bildet zusammen mit den Nachbildungen der Gewebeschichten 231, 232 die Abdeckung 210. Sie dient bevorzugt zur Abstützung der darüber liegenden Nachbildungen der Bauchwandschichten 231. Bevorzugt ist die Abdeckplatte 216 und somit die gesamte Abdeckung 210 vollständig oder zumindest teilweise abnehmbar um die simulierten Gewebeschichten auszutauschen. Ein solcher Austausch kann notwendig sein, um durch simulierte Operationen verschlissene Nachbildungen der Gewebeschichten auszutauschen. Es können auch andere Nachbildungen von Gewebeschichten mit anderen Eigenschaften eingesetzt werden. Bevorzugt hat ein Phantom mehrere austauschbare Abdeckplatten, so dass bei simulierten Operationen ein schneller Wechsel möglich ist. Zur sauberen Positionierung der Abdeckplatte 216 können Mittel zur Positionierung wie Anschläge und auch Verriegelungsmittel, wie Klammern, Federn, Schnellverschlüsse oder auch Schrauben oder Stifte vorgesehen sein.

Die Nachbildungen der Gewebeschichten der Abdeckung 210 umfassen wenigstens eine Nachbildung von Bauchwandschichten 231 und wenigstens eine Nachbildung einer Magenwandschicht 232, wobei von außen gesehen die Nachbildung der Bauchwandschichten 231 über der Nachbildung der Magenwandschicht 232 liegt. Der hier verwendete Begriff der Nachbildung der Gewebeschichten bezieht sich auf eine schichtartige Anordnung von Materialien zur Simulation von menschlichen Geweben. Die Materialien sind bevorzugt Kunststoffmaterialien wie Folien oder Schäume bzw. künstliches Gewebe mit elastischen und/oder plastischen Eigenschaften. Es wären auch Bio-Gewebe denkbar. Weiterhin ist es bevorzugt, wenn die Materialien der Nachbildungen der Gewebeschichten gleiche oder ähnliche Farben wie die entsprechenden Schichten der Körpergewebe haben. Bevorzugt sind die Nachbildungen der Bauchwandschichten 231 und die Nachbildungen der Magenwandschichten 232 übereinander angeordnet und gegeneinander beweglich als auch insbesondere verschiebbar.

Zwischen den Seitenwänden, der Bodenplatte und der Abdeckplatte wird ein Innenraum 219 gebildet. In diesem Innenraum sind bevorzugt Mittel zur Überwachung und/oder Beobachtung vorgesehen. Besonders bevorzugt ist wenigstens eine Kamera und/oder wenigstens eine Lichtquelle und/oder wenigstens ein Sensor im Innenraum angeordnet. In dem Ausführungsbeispiel der Figur 3 ist eine erste Kamera 250 und eine zweite Kamera 260 dargestellt. Selbst verständlich kann auch eine andere Anzahl von Kameras, beispielsweise eine Kamera oder mehr als zwei Kameras vorgesehen sein. In diesem Beispiel ist die erste Kamera 250 mit einer ersten Kamerabefestigung 251 am Phantom befestigt. Sie hat beispielhaft einen Bildwinkel 252, mit dem zumindest der Bereich der Nachbildung der Magenwandschichten 232 von der Unterseite aus abgebildet wird. Eine zweite Kamera 260 ist mit einer zweiten Kamerabefestigung 261 am Phantom befestigt. Sie hat einen Bildwinkel 262 mit dem ebenfalls der Bereich der Nachbildung der Magenwandschichten 232 von der Unterseite aus einer zweiten Perspektive abgebildet wird. Zur Beleuchtung kann eine erste Lichtquelle 281 vorgesehen sein. In einer besonders einfachen Ausführungsform des Phantoms kann auch auf die Eintrittsöffnungen verzichtet werden. Selbstverständlich kann auch jede Anzahl von Eintrittsöffnungen nach Bedarf vorgesehen sein.

Weiterhin ist beispielhaft ein erstes Instrument 351 sowie ein zweites Instrument 352 dargestellt. Diese können beispielsweise spezielle Nadeln sein. Diese Instrumente zeigen nur grundsätzlich, wie von der Außenseite - in der Figur von oben - durch die Nachbildung der Bauchwandschichten 231 und die Nachbildung der Magenwandschichten 232 ein Zugang zum Innenraum 219 erfolgt.

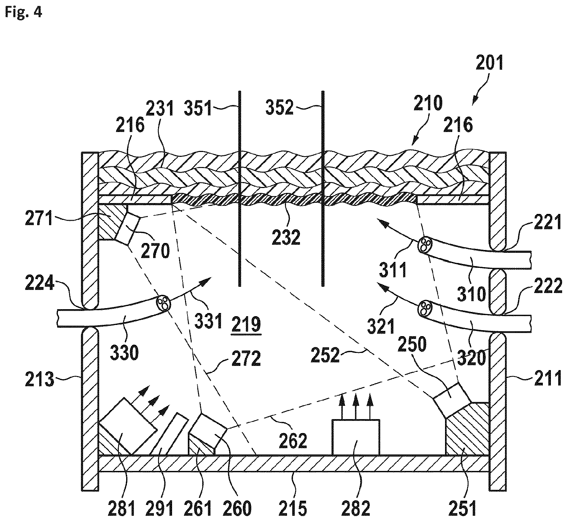

Die Figur 4 zeigt eine komplexere Ausführungsform des Phantoms. Der Innenraum 219 weist hier neben den zuvor beschriebenen Merkmalen noch eine dritte Kamera 270 auf, die mit einer dritten Kamerabefestigung 271 am Phantom befestigt ist und einen dritten Bildwinkel 272 hat. Mit dieser Kamera wird bevorzugt der Innenraum 219 abgebildet, um die Bewegung von vorhandenen Instrumenten zu erfassen. Weiterhin ist beispielhaft eine zweite Lichtquelle 282 zu einer besseren Ausleuchtung des Innenraums dargestellt. In diesem Beispiel ist ein erstes Endoskop 310 dargestellt, welches eine Blickrichtung 311 aufweist und durch eine erste Eintrittsöffnung 221 in den Innenraum 219 eingeführt ist. Ein zweites Endoskop 320 mit Blickrichtung 321 ist durch eine zweite Eintrittsöffnung 222 in den Innenraum 219 eingeführt. Schließlich ist noch ein drittes Endoskop 330 mit Blickrichtung 331 durch eine vierte Eintrittsöffnung 224 in den Innenraum eingeführt. Durch diese Endoskope kann eine weitere Manipulation im Innenraum und/oder Beobachtung des Innenraums erfolgen. Weiterhin ist noch ein erster Sensor 291 dargestellt. Mit wenigstens einem solchen Sensor kann beispielsweise die Bewegung eines Instruments im Innenraum verfolgt werden. So kann eine Annäherung an den Boden und/oder die Wände und/oder eine Komponente im Inneren des Innenraums erkannt und/oder angezeigt werden. Beispielsweise kann auf dem Monitor eine Warnung ausgegeben werden. Ebenso kann ein Hinweis bzw. eine Warnung ausgegeben werden, wenn bestimmte Zonen im Innenraum erreicht bzw. diese eingedrungen wird und/oder wenn durch ein Instrument beispielsweise zu tief in den Innenraum eingedrungen wird.

### Bezugszeichenliste

- 100: Monitor
- 110: Anzeige
- 111: Bedienelemente
- 200: Phantom
- 201: Behälter
- 210: Abdeckung
- 211: erste Seitenwand
- 212: zweite Seitenwand
- 213: dritte Seitenwand
- 214: vierte Seitenwand
- 215: Bodenplatte
- 216: Abdeckplatte
- 219: Innenraum
- 221: erste Eintrittsöffnung
- 222: zweite Eintrittsöffnung
- 223: dritte Eintrittsöffnung
- 224: vierte Eintrittsöffnung
- 231: Nachbildung der Bauchwandschichten
- 232: Nachbildung der Magenwandschichten
- 240: Schublade
- 250: erste Kamera
- 251: erste Kamerabefestigung
- 252: erste Kamera - Bildwinkel
- 260: zweite Kamera
- 261: zweite Kamerabefestigung
- 262: zweite Kamera - Bildwinkel
- 270: dritte Kamera
- 271: dritte Kamerabefestigung
- 272: dritte Kamera - Bildwinkel
- 281: erste Lichtquelle
- 282: zweite Lichtquelle
- 291: Sensor
- 310: erstes Endoskop
- 311: erstes Endoskop - Blickrichtung
- 320: zweites Endoskop
- 321: zweites Endoskop - Blickrichtung
- 330: drittes Endoskop
- 331: drittes Endoskop - Blickrichtung
- 351: erstes Instrument
- 352: zweites Instrument

## Patentansprüche

1. Phantom (200) zur Simulation und/oder zum Training einer Perkutanen Endoskopischen Gastrostomie umfassend das Auffinden einer für die Anlage einer Perkutanen Endoskopischen Gastrostomie geeigneten Stelle in der Bauchdecke sowie in der darunter befindlichen vorderen bzw. ventralen Magenwand durch Diaphanoskopie, das Phantom umfassend einen Behälter (201), der einen Innenraum (219) umschließt, mit
einer Abdeckung (210), die übereinanderliegend wenigstens eine Nachbildung von Bauchwandschichten (231) und wenigstens eine Nachbildung von Magenwandschichten (232) umfasst, wobei die Nachbildung der Magenwandschichten (232) zum Innenraum orientiert ist, und
wenigstens einer digitalen Videokamera (250, 260, 270) im Innenraum (219), die wenigstens einen Bereich der Nachbildung der Magenwandschichten (232) abbildet, wobei
die wenigstens eine Nachbildung der Bauchwandschichten (231) und die wenigstens eine Nachbildung der Magenwandschichten (232) zumindest teilweise gegeneinander beweglich sind, der Behälter (201) geschlossen ist, um einen geschlossenen Bauchraum zu simulieren, wobei der Behälter (201) eine Seitenwand (211) mit einer Eintrittsöffnung (221) zur Einführung wenigstens eines Endoskops (310) in den Innenraum (219) aufweist, wobei die Eintrittsöffnung (221) mit einem flexiblen und lichtdichten Material verschlossen ist, um unerwünschten Lichteinfall von außen zu verhindern, und dass
die Nachbildungen der Bauchwandschichten (231) und der Magenwandschichten (232) für die Diaphanoskopie geeignet sind und hierzu eine ausreichende Lichtdurchlässigkeit haben.

2. Phantom (200) nach einem der vorhergehenden Ansprüche,
**dadurch gekennzeichnet, dass**
die wenigstens eine Nachbildung von Bauchwandschichten (231) und/oder die wenigstens eine Nachbildung von Magenwandschichten (232) Kunststoffmaterialien wie Folien oder Schäume mit elastischen und/oder plastischen Eigenschaften umfasst.

3. Phantom (200) nach einem der vorhergehenden Ansprüche,
**dadurch gekennzeichnet, dass**
die wenigstens eine Nachbildung von Bauchwandschichten (231) und/oder die wenigstens eine Nachbildung von Magenwandschichten (232) künstliche Gewebe oder Biomaterialien umfasst.

4. Phantom (200) nach einem der vorhergehenden Ansprüche,
**dadurch gekennzeichnet, dass**
die wenigstens eine Nachbildung von Bauchwandschichten (231) und/oder die wenigstens eine Nachbildung von Magenwandschichten (232) Materialien umfassen, die zumindest an den Stellen, wo die Implantation perkutaner Ernährungssonden erfolgen soll, die gewebespezifischen haptischen Eigenschaften der verschiedenen Gewebeschichten der Bauchwand und/oder der jeweiligen Organwand entsprechen.

5. Phantom (200) nach einem der vorhergehenden Ansprüche,
**dadurch gekennzeichnet, dass**
die gewebespezifisch haptischen Eigenschaften der wenigstens einen Nachbildung von Bauchwandschichten (231) und/oder der wenigstens einen Nachbildung von Magenwandschichten (232) sich deutlicher unterscheiden als bei natürlichen Organen und Bauchdecken.

6. Phantom (200) nach einem der vorhergehenden Ansprüche,
**dadurch gekennzeichnet, dass**
die wenigstens eine Nachbildung von Bauchwandschichten (231) und/oder die wenigstens eine Nachbildung von Magenwandschichten (232) mit Nähfäden und/oder Ankern chirurgisch intervenierbar ist.

7. Phantom (200) nach einem der vorhergehenden Ansprüche,
**dadurch gekennzeichnet, dass**
die wenigstens eine Nachbildung von Bauchwandschichten (231) und/oder die wenigstens eine Nachbildung von Magenwandschichten (232) HF- chirurgisch schneidbar ist.

8. Phantom (200) nach einem der vorhergehenden Ansprüche,
**dadurch gekennzeichnet, dass**
die Abdeckung (210) zusammen mit der wenigstens einen Nachbidung der Bauchwandschichten (231) und der wenigstens einen Nachbildung von Magenwandschichten (232) abnehmbar ist.

9. Phantom (200) nach einem der vorhergehenden Ansprüche,
**dadurch gekennzeichnet, dass**
wenigstens eine weitere Kamera (270) im Innenraum (219) vorgesehen ist, welche Teile des Innenraums abbildet.

10. Phantom (200) nach einem der vorhergehenden Ansprüche,
**dadurch gekennzeichnet, dass**
wenigstens eine Lichtquelle (281, 282) im Innenraum (219) zur Beleuchtung des Innenraums vorgesehen ist.

11. Phantom (200) nach einem der vorhergehenden Ansprüche,
**dadurch gekennzeichnet, dass**
der Behälter (201) annähernd quaderförmig ist.

12. Phantom (200) nach einem der vorhergehenden Ansprüche,
**dadurch gekennzeichnet, dass**
wenigstens ein Sensor (291) zur Erfassung der Bewegung und/oder Orientierung und/oder Position eines Instruments (351, 352) und/oder eines Endoskops im Innenraum vorgesehen ist.

## Claims

1. A phantom (200) for the simulation and/or training of a percutaneous endoscopic gastrostomy comprising finding a point suitable for the placement of a percutaneous endoscopic gastrostomy in the abdominal wall and in the front or ventral stomach wall located therebelow by way of diaphanoscopy, the phantom comprising a container (201) which encloses an interior (219), with a covering (210), which comprises, one on top of another, at least one reproduction of abdominal wall layers (231) and at least one reproduction of stomach wall layers (232), wherein the reproduction of the stomach wall layers (232) is oriented towards the interior, and
at least one digital video camera (250, 260, 270) in the interior (219), which depicts at least one region of the reproduction of the stomach wall layers (232), wherein
the at least one reproduction of the abdominal wall layers (231) and the at least one reproduction of the stomach wall layers (232) are movable at least partially towards one another, the container (201) is closed in order to simulate a closed abdomen, wherein the container (201) has a side wall (211) with an inlet opening (221) for inserting at least one endoscope (310) into the interior (219),
wherein the inlet opening (221) is sealed with a flexible and light-proof material in order to prevent any undesired incidence of light from outside, and in that the reproductions of the abdominal wall layers (231) and the stomach wall layers (232) are suitable for the diaphanoscopy and, to this end, have a sufficient light permeability.

2. The phantom (200) according to one of the preceding claims,
**characterized in that**
the at least one reproduction of abdominal wall layers (231) and/or the at least one reproduction of stomach wall layers (232) comprises plastic materials such as films or foams with elastic and/or plastic properties.

3. The phantom (200) according to one of the preceding claims,
**characterized in that**
the at least one reproduction of abdominal wall layers (231) and/or the at least one reproduction of stomach wall layers (232) comprises synthetic tissue or biomaterials.

4. The phantom (200) according to one of the preceding claims,
**characterized in that**
the at least one reproduction of abdominal wall layers (231) and/or the at least one reproduction of stomach wall layers (232) comprise materials, which correspond at least at the points, where the implantation of percutaneous feeding tubes takes place, to the tissue-specific haptic properties of the different tissue layers of the abdominal wall and/or the respective organ wall.

5. The phantom (200) according to one of the preceding claims,
**characterized in that**
the tissue-specific haptic properties of the at least one reproduction of abdominal wall layers (231) and/or the at least one reproduction of stomach wall layers (232) differ more clearly than in the case of natural organs and abdominal walls.

6. The phantom (200) according to one of the preceding claims,
**characterized in that**
the at least one reproduction of abdominal wall layers (231) and/or the at least one reproduction of stomach wall layers (232) can be surgically intervened using suture threads and/or anchors.

7. The phantom (200) according to one of the preceding claims,
**characterized in that**
the at least one reproduction of abdominal wall layers (231) and/or the at least one reproduction of stomach wall layers (232) can be cut by means of highfrequency surgery.

8. The phantom (200) according to one of the preceding claims,
**characterized in that**
the covering (210), together with the at least one reproduction of the abdominal wall layers (231) and the at least one reproduction of stomach wall layers (232), is removable.

9. The phantom (200) according to one of the preceding claims,
**characterized in that**
at least one further camera (270) is provided in the interior (219), which depicts parts of the interior.

10. The phantom (200) according to one of the preceding claims,
**characterized in that**
at least one light source (281, 282) is provided in the interior (219) for illuminating the interior.

11. The phantom (200) according to one of the preceding claims,
**characterized in that**
the container (201) is approximately a cuboid shape.

12. The phantom (200) according to one of the preceding claims,
**characterized in that**
at least one sensor (291) is provided for detecting the movement and/or orientation and/or position of an instrument (351, 352) and/or of an endoscope in the interior.

## Revendications

1. Fantôme (200) pour la simulation et/ou l'apprentissage d'une gastrostomie percutanée endoscopique comprenant la recherche d'un point approprié pour la mise en place d'une gastrostomie percutanée endoscopique dans la paroi abdominale et dans la paroi avant ou ventrale de l'estomac située en dessous par diaphanoscopie, le fantôme comprenant un contenant (201) qui renferme un intérieur (219), avec une enveloppe (210), qui comprend, l'une sur l'autre, au moins une reproduction de couches de paroi abdominale (231) et au moins une reproduction de couches de paroi de l'estomac (232), dans lequel la reproduction des couches de paroi de l'estomac (232) est orientée vers l'intérieur, et
au moins une caméra vidéo numérique (250, 260, 270) à l'intérieur (219), qui montre au moins une région de la reproduction des couches de paroi de l'estomac (232), dans lequel
l'au moins une reproduction des couches de paroi abdominale (231) et l'au moins une reproduction des couches de paroi de l'estomac (232) sont mobiles au moins partiellement l'une vers l'autre, le contenant (201) est fermé afin de simuler un abdomen fermé, dans lequel le contenant (201) a une paroi latérale (211) avec une ouverture d'entrée (221) pour insérer au moins un endoscope (310) à l'intérieur (219),
dans lequel l'ouverture d'entrée (221) est scellée avec un matériau flexible et opaque afin d'empêcher toute incidence indésirable de lumière de l'extérieur, et en ce que
les reproductions des couches de paroi abdominale (231) et des couches de paroi de l'estomac (232) sont aptes pour la diaphanoscopie et, à cette fin, ont une perméabilité à la lumière suffisante.

2. Fantôme (200) selon l'une des revendications précédentes,
**caractérisé en ce que**
l'au moins une reproduction de couches de paroi abdominale (231) et/ou l'au moins une reproduction de couches de paroi de l'estomac (232) comprend des matières plastiques telles que des films ou des mousses aux propriétés élastiques et/ou plastiques.

3. Fantôme (200) selon l'une des revendications précédentes,
**caractérisé en ce que**
l'au moins une reproduction de couches de paroi abdominale (231) et/ou l'au moins une reproduction de couches de paroi de l'estomac (232) comprend du tissu synthétique ou des biomatériaux.

4. Fantôme (200) selon l'une des revendications précédentes,
**caractérisé en ce que**
l'au moins une reproduction de couches de paroi abdominale (231) et/ou l'au moins une reproduction de couches de paroi de l'estomac (232) comprennent des matériaux, qui correspondent au moins aux points, où a lieu l'implantation de sondes d'alimentation percutanées, aux propriétés haptiques spécifiques au tissu des différentes couches de tissu de la paroi abdominale et/ou de la paroi d'organe respectif.

5. Fantôme (200) selon l'une des revendications précédentes,
**caractérisé en ce que**
les propriétés haptiques spécifiques au tissu de l'au moins une reproduction de couches de la paroi abdominale (231) et/ou de l'au moins une reproduction des couches de paroi de l'estomac (232) diffèrent plus clairement que dans le cas d'organes naturels et de parois abdominales.

6. Fantôme (200) selon l'une des revendications précédentes,
**caractérisé en ce que**
l'au moins une reproduction des couches de paroi abdominale (231) et/ou l'au moins une reproduction de couches de paroi de l'estomac (232) peuvent être opérées chirurgicalement en utilisant des fils de suture et/ou ancres.

7. Fantôme (200) selon l'une des revendications précédentes,
**caractérisé en ce que**
l'au moins une reproduction de couches de paroi abdominale (231) et/ou l'au moins une reproduction de couches de paroi de l'estomac (232) peuvent être incisées par chirurgie à haute fréquence.

8. Fantôme (200) selon l'une des revendications précédentes,
**caractérisé en ce que**
l'enveloppe (210), conjointement à l'au moins une reproduction des couches de paroi abdominale (231) et à l'au moins une reproduction de couches de paroi de l'estomac (232), est amovible.

9. Fantôme (200) selon l'une des revendications précédentes,
**caractérisé en ce qu'**au moins une autre caméra (270) est fournie à l'intérieur (219),
qui montre des parties de l'intérieur.

10. Fantôme (200) selon l'une des revendications précédentes,
**caractérisé en ce qu'**au moins une source de lumière (281, 282) est fournie à l'intérieur (219) pour éclairer l'intérieur.

11. Fantôme (200) selon l'une des revendications précédentes,
**caractérisé en ce que**
le contenant (201) a une forme approximativement cuboïde.

12. Fantôme (200) selon l'une des revendications précédentes,
**caractérisé en ce qu'**au moins un capteur (291) est fourni pour détecter le mouvement et/ou l'orientation et/ou la position d'un instrument (351, 352) et/ou d'un endoscope à l'intérieur.
